# FASCICULE DE BREVET EUROPEEN

(11) **EP 1 619 440 B1**
(45) Date de publication et mention de la délivrance du brevet: **03.12.2008**
(21) Numéro de dépôt: 05300584.9
(22) Date de dépôt: 13.07.2005
(51) Int. Cl.: F21V 14/02, F21S 8/10

(54) **Dispositif d'éclairage pour véhicule automobile avec superposition de faisceaux**
Beleuchtungssystem für Kraftfahrzeuge mit Überlappung von Lichtbündeln
Lighting assembly for automotive vehicles with superposition of light beams

(30) Priorité: 23.07.2004 FR 0451637
(43) Date de publication de la demande: 25.01.2006
(73) Titulaire: Peugeot Citroën Automobiles SA, 78943 Vélizy-Villacoublay Cedex (FR)
(72) Inventeur: Deschamps, Maurice, F-92240 Malakoff (FR); Duceux, Stéphane, F-78340 Les-Clayes-sous-Bois (FR)
(74) Mandataire: Couillard, Yann Luc Raymond

(56) Documents cités:
- EP-A- 1 234 717
- FR-A- 668 644
- FR-A- 2 762 268
- FR-A- 2 787 863
- FR-A- 2 824 623
- GB-A- 2 395 548
- US-A1- 2001 006 468
- US-A1- 2003 031 020

## Description

L'invention se rapporte à un dispositif d'éclairage pour véhicule automobile, ainsi qu'à un véhicule automobile possédant un tel dispositif.

L'invention concerne plus particulièrement un dispositif d'éclairage pour véhicule automobile comportant un organe support sur lequel sont fixés un premier projecteur émettant un premier faisceau lumineux en mode « croisement » et un second projecteur émettant un second faisceau lumineux en mode « croisement » complémentaire dudit premier faisceau et des moyens d'acquisition de données relatives aux conditions de fonctionnement du véhicule.

Différents systèmes d'éclairage ont été proposés pour améliorer la vision de nuit du conducteur, notamment lorsque le dispositif d'éclairage émet en mode « croisement ». Ainsi des dispositifs particuliers ont été développés pour perfectionner l'éclairage de certaines zones sensibles comme les virages ou les intersections.

Ainsi, il est connu d'utiliser en plus du faisceau lumineux traditionnel émettant en mode « croisement », un second faisceau complémentaire destiné à éclairer la zone « sensible » définie ci-dessus. Ce second projecteur possède un axe optique orienté d'un certain angle par rapport à l'axe optique fixe du faisceau lumineux émettant en mode « croisement », cet angle reste fixe au cours du roulage du véhicule.

D'autre part, il est aussi connu de rendre le faisceau lumineux traditionnel, émettant en mode « croisement », orientable. Ainsi dans ce cas, le faisceau « croisement » est orienté en permanence selon la situation de roulage du véhicule. Toutefois ce type de dispositif présente l'inconvénient d'être cher et difficile à mettre au point.

La demande de brevet français FR 2787863 présente un bloc optique dans lequel un projecteur peut pivoter mais sans faire varier l'angle d'ouverture.

La demande de brevet FR 2762268 présente un bloc optique dont l'empreinte lumineuse de faisceau peut être modifié par divers moyens incluant un déplacement de la source lumineuse.

Un but de la présente invention est de pallier tout ou partie des inconvénients de l'art antérieur relevés ci-dessus et de proposer un dispositif d'éclairage présentant des performances améliorées par rapport à l'art antérieur connu.

A cette fin, le dispositif d'éclairage selon l'invention, par ailleurs conforme à la définition générique qu'en donne le préambule ci-dessus, est essentiellement caractérisé par la partie caractérisante de la revendication 1.

Par ailleurs, l'invention peut comporter l'une ou plusieurs des caractéristiques suivantes :
- la source lumineuse est montée mobile par rapport au réflecteur dudit système optique,
- les moyens de manoeuvre permettent de faire varier l'angle d'ouverture de 15 à 100 degrés, et de préférence de 20 à 70 degrés,
- ledit second projecteur et lesdits moyens de manoeuvre sont adaptés pour faire varier la position de l'axe optique dudit second faisceau lumineux par rapport à l'axe optique dudit premier faisceau, de façon à ce que l'angle formé par l'axe optique dudit second faisceau lumineux et l'axe optique dudit premier faisceau varie de 0 à 70 degrés, et de préférence de 5 à 45 degrés,
- ledit second projecteur et lesdits moyens de manoeuvre sont adaptés pour faire varier la distance de portée dudit second projecteur de 20 à 80 mètres, et de préférence de 25 à 50 mètres,
- lesdits moyens de manoeuvre sont constitués par un actionneur piloté, par exemple de type vérins, moteurs ou alliages à mémoire de forme,
- lesdits moyens de manoeuvre sont constitués par deux actionneurs distincts pilotés,
- lesdits moyens de manoeuvre comprennent également un moyen de rappel élastique,
- le second projecteur est fixé sur l'organe support par l'intermédiaire d'une rotule ou d'un pivot et en ce que lesdits moyens de manoeuvre commandent la dite rotule ou ledit pivot de façon à faire pivoter le corps dudit projecteur en réponse aux données de fonctionnement,
- ledit second projecteur et lesdits moyens de manoeuvre sont adaptés pour faire varier les paramètres géométriques dudit second projecteur selon un nombre discret de valeurs,
- les données de fonctionnement fournies par les moyens d'acquisition de données dépendent de la vitesse du véhicule et/ou de l'angle de braquage du véhicule.

Un autre but de l'invention est de proposer un véhicule automobile comportant un tel dispositif d'éclairage.

D'autres particularités et avantages apparaîtront à la lecture de la description ci-après faite en référence aux figures dans lesquelles :
- la figure 1 représente une vue de dessus schématique d'un véhicule comportant deux dispositifs d'éclairage, chaque dispositif étant composé de deux projecteurs : un projecteur principal et un projecteur complémentaire,
- la figure 2 représente une vue en section axiale verticale d'un des projecteurs de la figure 1,
- la figure 3 représente une vue de dessus schématique d'un dispositif d'éclairage de la figure 1,
- la figure 4 représente deux vues de dessus schématiques d'un projecteur complémentaire de la figure 1, chaque vue représentant une configuration distincte de fonctionnement,
- la figure 5 représente une vue de dessus des halos de lumière diffusés par un dispositif d'éclairage de la figure 1 dans le plan de la route,
- la figure 6 représente schématiquement l'architecture et le fonctionnement du dispositif d'éclairage conforme à l'invention

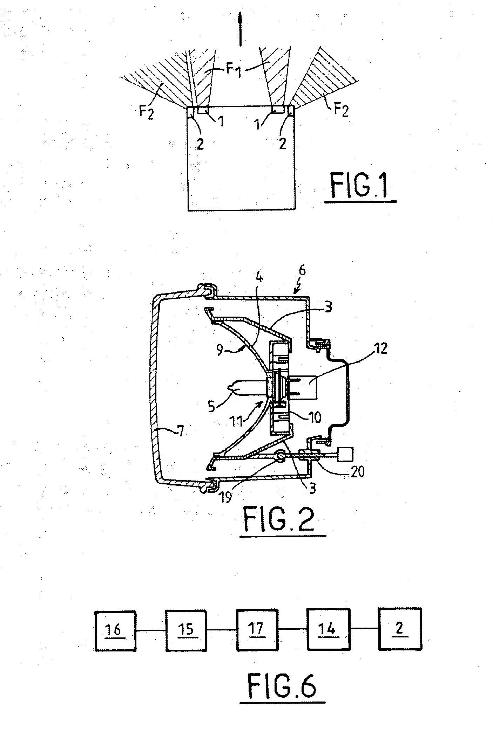

La figure 1 présente un véhicule automobile équipé de deux dispositifs d'éclairage placés à l'avant du véhicule, l'un placé sur la gauche du véhicule, l'autre placé sur la droite du véhicule. La flèche, indiquée sur la figure 1, représente le sens de roulage du véhicule. Les deux dispositifs d'éclairage sont ainsi placés de façon complémentaire afin d'illuminer au mieux la chaussée.

Chaque dispositif d'éclairage comporte deux projecteurs 1, 2: un projecteur 1 principal et un projecteur 2 complémentaire, tous les deux sont destinés à émettre en mode « croisement », aussi appelé mode « code ».

Les projecteurs 1, 2 sont montés dans une même enceinte close que l'on peut nommer bloc optique, chaque bloc se compose d'un boîtier 6 et d'une glace 7 fixée à ce dernier.

Les projecteurs 1, 2 appartenant au dispositif d'éclairage possèdent une architecture classique, telle que le montre la figure 2. Chaque projecteur 1, 2 comporte un réflecteur 4 comprenant une paroi à face réfléchissante 9, dont la forme est calculée pour obtenir une répartition lumineuse optimale, ici la paroi 9 a une forme parabolique. Le réflecteur 4 est fixé sur une embase 10. Le réflecteur 4 et l'embase 10 sont accolées en leur zone centrale, celles-ci présentant une ouverture 11. Chaque projecteur 1, 2 comporte un porte-lampe 12 fixé au réflecteur 4 par des moyens appropriés et supportant une lampe 5 s'étendant dans l'ouverture 11.

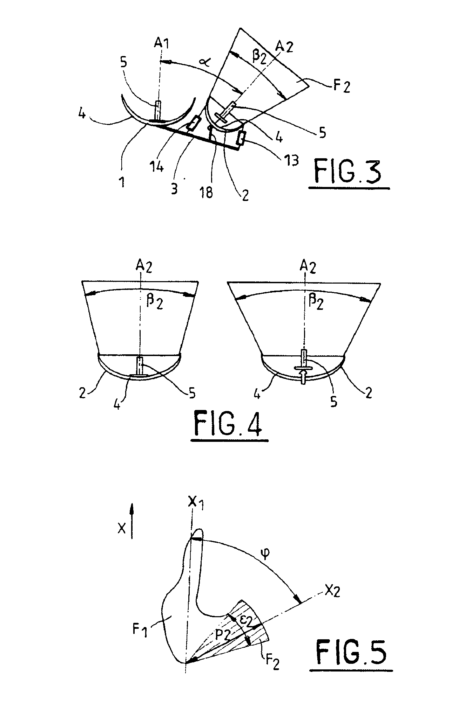

Le projecteur principal 1 est apte à émettre un faisceau lumineux F1 possédant un axe optique A1, de même le second projecteur 2 est apte à émettre un faisceau F2 possédant un axe optique A2, tel que le montre la figure 3. Le faisceau lumineux F1 possède classiquement une forme dissymétrique de façon à ne pas éblouir les automobilistes venant en sens inverse.

Les axes optiques A1 et A2, non parallèles, des deux projecteurs 1,2 définissent entre eux un angle α, appelé l'angle des axes optiques.

Si l'on projeté les faisceaux F1, F2 dans le plan de la route, de nouveaux axes optiques peuvent être définis, respectivement, X1 et X2 formant entre eux un angle ϕ, nommé l'azimut (voir figure 5).

Chaque projecteur 1, 2 génère respectivement un faisceau lumineux F1, F2 d'angles β1, β2 variables selon la position de la lampe 5 par rapport au réflecteur 4. La figure 4 met ainsi en évidence que l'éloignement de la lampe 5 par rapport au réflecteur 4 (voir flèche) permet une augmentation de l'angle β d'un faisceau lumineux.

La projection d'un faisceau lumineux F1, F2 d'un projecteur 1, 2 dans le plan de la route permet de définir l'angle du faisceau lumineux ε1, ε2, cet angle ε est aussi nommé l'ouverture.

Toujours dans le plan de la route, la figure 5 met en évidence un autre paramètre des faisceaux F1, F2 : la portée P, qui peut être définie comme la longueur de la surface de la route éclairée par le faisceau lumineux.

Ainsi, l'azimut ϕ, la portée P1, P2 et l'ouverture ε1, ε2 définis dans le plan de la route correspondent aux paramètres du dispositif d'éclairage ; ce sont les paramètres visualisés par le conducteur.

La figure 3 met en évidence le montage des projecteurs 1, 2 appartenant au dispositif optique objet de l'invention ; ces projecteurs 1, 2 sont fixés au boîtier 6 par l'intermédiaire d'un bâti 3.

Le bâti 3 est fixé sur le boîtier 6 par l'intermédiaire de rotules 19, toutes les rotules ne sont pas représentés sur la figure 2. La rotule 19 est montée mobile par rapport au boîtier 6 par l'intermédiaire d'un système de vis sans fin 20. Ce type de liaison permet de régler la pente des axes optiques A1, A2 des projecteurs 1, 2.

Le projecteur 1 est monté de façon fixe sur le bâti 3. Le projecteur complémentaire 2 est monté de façon mobile sur le bâti 3 par l'intermédiaire d'un pivot 18 et d'un ensemble ressort 13 - actionneur 14. Le ressort 13 et l'actionneur 14 sont disposés de part et d'autre du pivot 18 de façon à relier le réflecteur 4 du projecteur 2 au bâti 3.

Le projecteur complémentaire 2 peut également être monté sur le bâti 3 par l'intermédiaire d'une rotule.

Différents actionneurs 14 dits « simple effet » classiques peuvent être utilisés en complément du ressort 13 tels que :
des vérins électromécaniques (électro-aimants), des vérins hydrauliques, des vérins pneumatiques, des moteurs électriques ou des actionneurs en « métaux intelligents » de type « alliages à mémoire de forme ».

En remplacement du ressort 13 cité ci-dessus, un second actionneur « simple effet » peut être utilisé, cet actionneur possède alors un fonctionnement inverse au premier actionneur 14 « simple effet ».

Différents actionneurs dits « double effet » peuvent également être utilisés, ces systèmes présentent l'avantage d'être utilisés sans le ressort 13. Les actionneurs dits « double effet » peuvent être également des vérins électromécaniques, des vérins hydrauliques, des vérins pneumatiques, des moteurs électriques ou des actionneurs en « métaux intelligents ». Ces actionneur dits « double effet » possèdent la particularité d'être "moteur" dans deux directions opposées.

Il peut également être envisagé d'utiliser à la place de l'ensemble actionneur 14 - ressort 13, un moteur électrique qui entraîne directement ou par l'intermédiaire d'engrenage le pivot 18.

La figure 6 décrit le mode de fonctionnement global du dispositif optique conforme à l'invention. Le dispositif optique, comporte des moyens d'acquisition 15 de données 16 relatives au fonctionnement du véhicule. Ainsi selon les informations reçues, les moyens d'acquisition 15 envoient un signal 17 à l'actionneur 14. Les moyens d'acquisition 15 peuvent être composés d'un calculateur électronique intégré de type microcontrôleur, ballast adapté ou BSI - BSM.

Ainsi, lorsque aucun signal 17 n'a été reçu par l'actionneur 14, le ressort 13 permet le maintien du projecteur complémentaire 2 dans sa « position de repos ». Mais dès qu'un signal 17 est envoyé à l'actionneur 14, ce dernier agit sur le projecteur complémentaire 2 de façon à modifier l'angle des axes optiques α et, ainsi, agit sur au moins un paramètre ε, ϕ ou P du dispositif d'éclairage.

Dans le cas où l'on utilise un actionneur « double effet », les moyens d'acquisition 15 envoient en permanence un signal 17 à l'actionneur ; selon le signal 17 reçu, l'actionneur place le projecteur complémentaire 2 dans la position souhaitée.

Un actionneur complémentaire, non représenté, peut aussi être disposé de façon à permettre la translation de la lampe 5 par rapport au réflecteur 4, comme le montre la figure 4, et ainsi faire varier l'angle β du faisceau, de cette façon, on réalise une défocalisation.

Selon un mode de réalisation, l'actionneur complémentaire peut être placé de façon à assurer la liaison entre le porte-lampe 12 et le réflecteur 4. De la même façon que décrit précédemment, on peut utiliser un actionneur « simple effet » associé à un ressort ou un actionneur « double effet » seul.

Mais on peut également envisager un seul actionneur (non représenté) permettant de faire varier simultanément l'angle des axes optiques α et l'angle du faisceau β. Dans ce cas-là, le porte-lampe 12 est monté libre en translation par rapport au réflecteur 4. L'actionneur relie le bâti 3 au réflecteur 4 et au porte-lampe 12. Une rotation du réflecteur 4 par rapport au bâti 3 entraîne alors une translation du porte-lampe 12 et donc de la lampe 5 par rapport au réflecteur 4. Comme dans les autres cas, un actionneur « simple effet » couplé à un ressort peut être utilisé ou seulement un actionneur « double effet ».

Ainsi cet unique actionneur a pour effet de tourner le projecteur complémentaire 2 mais aussi simultanément de translater la lampe 5 par rapport au réflecteur 4.

Différents exemples de réalisation peuvent ainsi être envisagés. Ainsi, dans chacun des exemples décrits ci-dessous, le projecteur 1 principal possède une position fixe et le projecteur 2 complémentaire est monté mobile selon deux positions. Chaque position étant définie par les paramètres ε, ϕ ou P du projecteur 2 complémentaire.

Ainsi, le projecteur 2 complémentaire, dans une première position définie comme sa « position de repos », possède les paramètres ε21, ϕ21, et P21. La deuxième position du projecteur 2 complémentaire, définie par les paramètres ε22, ϕ22, et P22, diffère de la première position de façon à ce qu'au moins un des paramètres ε, ϕ ou P du projecteur 2 complémentaire varie.

Selon un exemple de réalisation, la première position, aussi appelée « position de repos » peut être définie comme la position du projecteur 2 complémentaire lorsque le véhicule roule de 0 à 40 km/h, la deuxième position comme la position du projecteur 2 complémentaire lorsque le véhicule roule au-delà de 40 km/h.

Ainsi pour un dispositif optique équipé d'un actionneur « double effet », pour une vitesse 16 du véhicule supérieure à 40 km/h, les moyens d'acquisition 15 envoient un signal 17 à l'actionneur qui déplace le projecteur 2 complémentaire de sa « position de repos ».

Lorsque le véhicule repasse en dessous de 40 km/h, les moyens d'acquisition 15 envoient un autre signal 17 à l'actionneur qui déplace le projecteur 2 complémentaire de façon à le replacer dans sa position initiale définie par ses paramètres ε21, ϕ21, et P21 initiaux.

Dans sa « position de repos », le dispositif optique est défini par l'angle des axes optiques α et par l'angle β2 du faisceau lumineux du projecteur complémentaire 2.

Différents modes de fonctionnement de l'invention peuvent être envisagés, quelques cas sont définis ci-dessous.

### Cas n° 1 :

Selon un premier mode de réalisation, lorsque la vitesse 16 du véhicule dépasse 40 km/h, l'angle des axes optiques α est diminué tandis que l'angle β2 du faisceau lumineux du projecteur complémentaire 2 reste identique.

Lorsque l'axe du pivot 18 est vertical, la modification de l'angle des axes optiques α a lieu dans le plan de la route, alors, seul l'azimut ϕ22 varie : sa valeur diminue. Ainsi le faisceau F2 du projecteur 2 complète le faisceau du projecteur principal F1 de façon à obtenir un éclairage optimal.

### Cas n° 2 :

Selon un deuxième mode de réalisation, lorsque la vitesse 16 du véhicule dépasse 40 km/h, l'angle des axes optiques α est diminué tandis que l'angle β2 du faisceau lumineux du projecteur complémentaire 2 reste identique.

Lorsque l'axe du pivot 18 n'est pas vertical, cette modification permet d'agir sur l'ensemble des paramètres du projecteur complémentaire 2 : l'azimut ϕ22, l'ouverture ε22 et la portée P22. Le rapport de variation des paramètres ϕ, ε, P est fonction de l'orientation de l'axe du pivot 18. Cela a donc pour conséquence une réduction de l'azimut ϕ22 et une augmentation de l'ouverture ε22 et de la portée P22.

En effet il est préférable pour une vitesse faible d'éclairer plus largement la chaussée puisque cette vitesse signifie en principe que l'on se trouve dans une situation dangereuse : routes sinueuses, intersections... le conducteur souhaite à ce moment obtenir un éclairage latéral supplémentaire. Alors qu'à plus grande vitesse, le conducteur privilégie sa vision à l'avant du véhicule.

### Cas n° 3 :

Selon un troisième mode de réalisation, il est possible de faire varier seulement l'angle β2 du faisceau lumineux F2 du projecteur 2 complémentaire.

Ainsi lorsque la vitesse 16 dépasse 40 km/h, la lampe 5 est rapprochée du réflecteur 4 de façon à ce qu'un faisceau F2 plus étroit éclaire la route, l'angle β2 du faisceau lumineux F2 du projecteur 2 complémentaire est alors diminué, ce qui entraîne une diminution de l'ouverture ε22 et une augmentation de la portée P22. L'azimut ϕ21 reste lui identique.

### Cas n° 4 :

Un autre mode de réalisation consiste à modifier les deux angles α et β2 simultanément. Ainsi lorsque la vitesse 16 dépasse 40 km/h, les angles α et β2 sont modifiés soit par un seul actionneur, soit par deux actionneurs, tels que décrits précédemment. Différents cas peuvent être envisagés :

### Cas n°a :

Lorsque la vitesse 16 dépasse 40 km/h, la diminution des angles α et β2 entraîne une diminution de l'azimut ϕ22 et de l'ouverture ε22 et une augmentation de la portée P22.

### Cas n°b :

Si la variation de l'angle α a lieu dans le plan de la route, la diminution des angles α et β2 entraîne une diminution de l'azimut ϕ22 et de l'ouverture ε22. La portée P21 reste constante.

Bien sûr, la variation des angles α et β2 peut être soumise à d'autres paramètres 16 de fonctionnement du véhicule tels que l'angle de braquage du véhicule, l'activation d'un clignotant ou l'évolution des conditions météorologiques.

Selon un autre exemple de réalisation, la lampe 5 du projecteur complémentaire 2 peut être éteinte lorsque le véhicule roule en ligne droite, l'allumage est alors fonction de l'angle de rotation du volant et/ou de l'activation du clignotant. Ainsi, si suite aux données recueillies, un virage à gauche est identifié, seul le projecteur complémentaire 2 situé du coté de la rotation du volant s'allume.

Par exemple, pour une vitesse inférieure à 40 Km/h, la lampe 5 du projecteur 2 s'allume avec un angle d'ouverture ε1, pour un angle volant supérieur à 30 ° et s'éteint lorsque l'angle du volant redevient inférieur à 20°. Pour une vitesse supérieure à 40 Km/h, le projecteur s'allume avec un angle d'ouverture ε2, pour un angle volant supérieur à 10° et s'éteint lorsque l'angle du volant redevient inférieur à 5°.

Ainsi selon les exemples cités précédemment :
- l'azimut ϕ peut varier de 0° à 70°, et de préférence de 5 à 45°,
- l'ouverture ε peut varier de 15° à 100°, et de préférence de 20 à 70°,
- la portée P peut varier de 20 à 80°, et de préférence de 25 à 50°.

Selon les exemples vus ci-dessus :
- la variation de l'azimut ϕ permet d'adapter l'orientation de l'éclairage en fonction du tracé de la route suivi par le véhicule,
- la variation de l'ouverture ε permet d'adapter la surface latérale couverte par l'éclairage et la densité de cet éclairage,
- la variation de la portée P permet d'éclairer plus ou moins loin à l'avant du véhicule.

Mais bien sûr ces différentes variations sont fonction du type de véhicule sur lequel est appliqué le dispositif optique et des stratégies de pilotage choisies.

Selon d'autres modes de réalisation, les paramètres ϕ, ε, P du projecteur complémentaire 2 peuvent varier selon plus de deux valeurs ; cela peut être réalisé par exemple à l'aide d'un actionneur qui permet d'obtenir plus de deux positions ou à l'aide d'un actionneur supplémentaire.

Bien sûr le dispositif d'éclairage, objet de l'invention, peut venir en complément d'un projecteur lointain supplémentaire, éventuellement placé dans le même bloc optique.

Mais on peut aussi envisager que le projecteur principal 1 appartenant au dispositif d'éclairage objet de l'invention, soit composé d'une lampe bi-filament ayant la capacité d'éclairer en mode « route » et en mode « croisement ».

Le projecteur principal 1 peut également utilisé la « technique de projection » (non représenté). La lumière est alors projetée sur la route à l'aide d'une lentille en verre asphérique. Un occulteur mobile assure la répartition lumineuse : en position haute, il produit la coupure clair-obscur spécifiée pour les projecteurs code alors qu'en position basse, il permet le passage du faisceau des projecteurs route.

Dans ces cas là, le projecteur complémentaire 2 peut éclairer lorsque le projecteur principal 1 est en mode « croisement » ou en mode « route ».

Bien sûr, l'azimut ϕ, l'ouverture ε et la portée P de chaque projecteur complémentaire 2 situé côté gauche et côté droit du véhicule sont indépendants et peuvent prendre des valeurs différentes lors du fonctionnement du véhicule.

## Revendications

1. Dispositif d'éclairage pour véhicule automobile comportant un bloc optique pour véhicule automobile comprenant un organe support (3) sur lequel sont fixés un premier projecteur (1) émettant un premier faisceau lumineux (F1) en mode « croisement » et un second projecteur (2) émettant un second faisceau lumineux (F2) en mode « croisement » complémentaire dudit premier faisceau (F1) et des moyens d'acquisition (15) de données (16) relatives aux conditions de fonctionnement du véhicule, **caractérisé en ce que** le second projecteur (2) comporte une source lumineuse (5) montée mobile en translation sur l'axe optique (A2, X2) du système optique (4) à l'aide de moyens de manoeuvre de façon à faire varier l'angle d'ouverture (ε) dudit second projecteur (2) en fonction des données (16) de fonctionnement fournies par lesdits moyens d'acquisition (15), **en ce que** l'axe optique du premier projecteur est fixe, et **en ce que** les axes optiques des premier et deuxième projecteurs ne sont pas parallèles entre eux.

2. Dispositif d'éclairage selon la revendication 1, **caractérisé en ce que** la source lumineuse (5) est montée mobile par rapport au réflecteur (4) dudit système optique.

3. Dispositif d'éclairage selon la revendication 1 ou 2, **caractérisé en ce que** les moyens de manoeuvre permettent de faire varier l'angle d'ouverture (ε) de 15 à 100 degrés, et de préférence de 20 à 70 degrés.

4. Dispositif d'éclairage selon l'une des revendications précédentes, **caractérisé en ce que** ledit second projecteur (2) et lesdits moyens de manoeuvre (13, 14) sont adaptés pour faire varier la position de l'axe optique (A2, X2) dudit second faisceau lumineux (F2) par rapport à l'axe optique (A1, X1) dudit premier faisceau (F1), de façon à ce que l'angle (ϕ) formé par l'axe optique (A2, X2) dudit second faisceau lumineux (F2) et l'axe optique (A1, X1) dudit premier faisceau (F1) varie de 0 à 70 degrés, et de préférence de 5 à 45 degrés.

5. Dispositif d'éclairage selon l'une des revendications précédentes, **caractérisé en ce que** ledit second projecteur (2) et lesdits moyens de manoeuvre (13, 14) sont adaptés pour faire varier la distance de portée (P) dudit second projecteur (2) de 20 à 80 mètres, et de préférence de 25 à 50 mètres.

6. Dispositif d'éclairage selon l'une quelconque des revendications précédentes, **caractérisé en ce que** lesdits moyens de manoeuvre (14) sont constitués par un actionneur piloté, par exemple de type vérins, moteurs ou alliages à mémoire de forme.

7. Dispositif d'éclairage selon la revendication 6, **caractérisé en ce que** lesdits moyens de manoeuvre sont constitués par deux actionneurs distincts pilotés.

8. Dispositif d'éclairage selon la revendication 6 ou 7, **caractérisé en ce que** lesdits moyens de manoeuvre (13) comprennent également un moyen de rappel élastique.

9. Dispositif d'éclairage selon l'une des revendications précédentes, **caractérisé en ce que** le second projecteur (2) est fixé sur l'organe support (3) par l'intermédiaire d'une rotule ou d'un pivot (18) et **en ce que** lesdits moyens de manoeuvre (13, 14) commandent la dite rotule ou ledit pivot (18) de façon à faire pivoter le corps dudit projecteur (2) en réponse aux données (16) de fonctionnement.

10. Dispositif d'éclairage selon l'une quelconque des revendications précédentes, **caractérisé en ce que** ledit second projecteur (2) et lesdits moyens de manoeuvre (13, 14) sont adaptés pour faire varier les paramètres géométriques (ε, ϕ, P) dudit second projecteur (2) selon un nombre discret de valeurs.

11. Dispositif d'éclairage selon l'une quelconque des revendications précédentes, **caractérisé en ce que** les données (16) de fonctionnement fournies par les moyens (15) d'acquisition de données dépendent de la vitesse du véhicule et/ou de l'angle de braquage du véhicule.

12. Véhicule automobile **caractérisé en ce qu'**il comporte un dispositif d'éclairage conforme à l'une des revendications précédentes.

## Claims

1. Lighting assembly for a motor vehicle comprising a lighting unit for a motor vehicle comprising a support (3) to which there are fitted a first headlamp (1) that emits a first light beam (F1) in "dipped beam" mode and a second headlamp (2) that emits a second light beam (F2) in "dipped beam" mode that complements the said first beam (F1) and data acquisition means (15) for acquiring data (16) relating to the vehicle operating conditions, **characterized in that** the second headlamp (2) comprises a light source (5) mounted such that it can be moved translationally along the optical axis (A2, X2) of the optical system (4) by manoeuvring means so as to vary the divergence (β) of the said second headlamp (2) according to the operating data (16) supplied via the said data acquisition means (15), **in that** the optical axis of the first headlamp is fixed, and **in that** the optical axes of the first and second headlamps are not mutually parallel.

2. Lighting assembly according to Claim 1, **characterized in that** the light source (5) is mounted such that it can be moved with respect to the reflector (4) of the said optical system.

3. Lighting assembly according to Claim 1 or 2, **characterized in that** the manoeuvring means make it possible to vary the divergence (ε) from 15 to 100 degrees, and preferably from 20 to 70 degrees.

4. Lighting assembly according to one of the preceding claims, **characterized in that** the said second headlamp (2) and the said manoeuvring means (13, 14) are designed to vary the position of the optical axis (A2, X2) of the said second light beam (F2) with respect to the optical axis (A1, X1) of the said first beam (F1) so that the angle (ϕ) formed by the optical axis (A2, X2) of the said second light beam (F2) and the optical axis (A1, X1) of the said first beam (F1) varies from 0 to 70 degrees and preferably from 5 to 45 degrees.

5. Lighting assembly according to one of the preceding claims, **characterized in that** the said second headlamp (2) and the said manoeuvring means (13, 14) are designed to vary the physical range (P) of the said second headlamp (2) from 20 to 80 metres, and preferably from 25 to 50 metres.

6. Lighting assembly according to any one of the preceding claims, **characterized in that** the said manoeuvring means (14) consist of a controlled actuator, for example of the cylinder actuator, motor, or shape-memory-alloy type.

7. Lighting assembly according to Claim 6, **characterized in that** the said operating means consist of two separate controlled actuators.

8. Lighting assembly according to Claim 6 to 7, **characterized in that** the said manoeuvring means (13) also comprise an elastic return means.

9. Lighting assembly according to one of the preceding claims, **characterized in that** the second headlamp (2) is fixed to the support member (3) via a ball joint or a pivot (18) and **in that** the said manoeuvring means (13, 14) control the said ball joint or the said pivot (18) in such a way as to pivot the body of the said headlamp (2) in response to the operating data (16).

10. Lighting assembly according to any one of the preceding claims, **characterized in that** the said second headlamp (2) and the said manoeuvring means (13, 14) are designed to vary the geometric parameters (ε, ϕ, P) of the second headlamp (2) using a discrete number of values.

11. Lighting assembly according to any one of the preceding claims, **characterized in that** the operating data (16) supplied by the data acquisition means (15) are dependent on the speed of the vehicle and/or on the vehicle steering angle.

12. Motor vehicle, **characterized in that** it comprises a lighting assembly according to one of the preceding claims.

## Patentansprüche

1. Beleuchtungsvorrichtung für ein Kraftfahrzeug, umfassend einen optischen Block für ein Kraftfahrzeug, umfassend ein Stützelement (3), auf dem ein erster Projektor (1), der einen ersten Lichtstrahl (F1) im "Kreuzungsmodus" entsendet, und einen zweiten Projektor (2), der einen zweiten Lichtstrahl (F2) im zum ersten Strahl (F1) komplementären "Kreuzungsmodus" entsendet, und Mittel (15) zur Erfassung von Daten (16) zu den Betriebsbedingungen des Fahrzeugs, **dadurch gekennzeichnet, dass** der zweite Projektor (2) eine Lichtquelle (5) umfasst, die in Translation beweglich auf der optischen Achse (A2, X2) des optischen Systems (4) mit Hilfe von Steuermitteln befestigt ist, um den Öffnungswinkel (β) des zweiten Projektors (2) in Abhängigkeit von den von den Erfassungsmitteln (15) gelieferten Betriebsdaten (16) zu variieren, dass die optische Achse des ersten Projektors fest ist, und dass die optischen Achsen des ersten und des zweiten Projektors nicht zueinander parallel sind.

2. Beleuchtungsvorrichtung nach Anspruch 1, **dadurch gekennzeichnet, dass** die Lichtquelle (5) in Bezug zum Reflektor (4) des optischen Systems beweglich montiert ist.

3. Beleuchtungsvorrichtung nach Anspruch 1 oder 2, **dadurch gekennzeichnet, dass** es die Steuermittel ermöglichen, den Öffnungswinkel (ε) von 15 bis 100 Grad, vorzugsweise von 20 bis 70 Grad, zu variieren.

4. Beleuchtungsvorrichtung nach einem der vorhergehenden Ansprüche, **dadurch gekennzeichnet, dass** der zweite Projektor (2) und die Steuermittel (13, 14) dazu ausgeführt sind, die Position der optischen Achse (A2, X2) des zweiten Lichtstrahls (F2) in Bezug zur optischen Achse (A1, X1) des ersten Strahls (F1) zu variieren, so dass der Winkel (ϕ), der von der optischen Achse (A2, X2) des zweiten Lichtstrahls (F2) und der optischen Achse (A1, X1) des ersten Strahls (F1) gebildet wird, von 0 bis 70 Grad, vorzugsweise von 5 bis 45 Grad, variiert.

5. Beleuchtungsvorrichtung nach einem der vorhergehenden Ansprüche, **dadurch gekennzeichnet, dass** der zweite Projektor (2) und die Steuermittel (13, 14) dazu ausgeführt sind, die Reichweite (P) des zweiten Projektors (2) von 20 bis 80 Meter, vorzugsweise von 25 bis 50 Meter, zu variieren.

6. Beleuchtungsvorrichtung nach einem der vorhergehenden Ansprüche, **dadurch gekennzeichnet, dass** die Steuermittel (14) von einem gesteuerten Betätigungselement, beispielsweise vom Typ Zylinder, Motoren oder Legierungen mit Formgedächtnis, gebildet sind.

7. Beleuchtungsvorrichtung nach Anspruch 6, **dadurch gekennzeichnet, dass** die Steuermittel von zwei getrennten gesteuerten Betätigungselementen gebildet sind.

8. Beleuchtungsvorrichtung nach Anspruch 6 oder 7, **dadurch gekennzeichnet, dass** die Steuermittel (13) auch ein elastisches Rückstellmittel umfassen.

9. Beleuchtungsvorrichtung nach einem der vorhergehenden Ansprüche, **dadurch gekennzeichnet, dass** der zweite Projektor (2) auf dem Stützelement (3) mit Hilfe eines Kugelgelenks oder Zapfens (18) befestigt ist, und dass die Steuermittel (13, 14) das Kugelgelenk oder den Zapfen (18) derart steuern, dass der Körper des Projektors (2) als Antwort auf die Betriebsdaten (16) geschwenkt wird.

10. Beleuchtungsvorrichtung nach einem der vorhergehenden Ansprüche, **dadurch gekennzeichnet, dass** der zweite Projektor (2) und die Steuermittel (13, 14) dazu ausgeführt sind, dass sie die geometrischen Parameter (ε, ϕ, P) des zweiten Projektors (2) nach einer diskreten Wertezahl variieren.

11. Beleuchtungsvorrichtung nach einem der vorhergehenden Ansprüche, **dadurch gekennzeichnet, dass** die von den Datenerfassungsmitteln (15) gelieferten Betriebsdaten (16) von der Geschwindigkeit des Fahrzeugs und/oder vom Einschlagwinkel des Fahrzeugs abhängen.

12. Kraftfahrzeug, **dadurch gekennzeichnet, dass** es eine Beleuchtungsvorrichtung nach einem der vorhergehenden Ansprüche umfasst.
